Europäisches Patentamt

European Patent Office

Office européen des brevets

(11) Veröffentlichungsnummer: **0 340 548**
**A1**

## (12) EUROPÄISCHE PATENTANMELDUNG

(21) Anmeldenummer: **89107111.0**

(22) Anmeldetag: **20.04.89**

(51) Int. Cl.⁴: **A01B 29/04 , B60C 17/04**

(30) Priorität: **05.05.88 DE 3815280**

(43) Veröffentlichungstag der Anmeldung:
**08.11.89 Patentblatt 89/45**

(84) Benannte Vertragsstaaten:
**AT DE FR GB NL**

(71) Anmelder: **Amazonen-Werke H. Dreyer GmbH & Co. KG**
**Am Amazonenwerk 9-13**
**D-4507 Hasbergen-Gaste(DE)**

(72) Erfinder: **Siefken, Claus**
**Bookhorn 29**
**D-2875 Ganderkesee 1(DE)**

(54) **Bodenwalze.**

(57) Bodenwalze, insbesondere Nachlaufwalze hinter einer Bodenbearbeitungsmaschine und/oder als Fahrwerk einer Drillmaschine, mit nebeneinander auf einem Traggerüst drehbar angeordneten Gummireifen, wobei im Inneren der Gummireifen zwischen dem Traggerüst und der Lauffläche der Gummireifen ein oder mehrere Stützkörper zum Abstützen der Lauffläche angeordnet sind. Um die Anordnung von Stützkörpern innerhalb der Gummireifen bei der bekannten Bodenwalze wesentlich zu vereinfachen und zu verbessern und gleichzeitig entsprechende Reifen zu schaffen, ist vorgesehen, daß die Stützkörper (17) auf der Innenseite (18) der Lauffläche (19,21) der Reifen (9) angeordnet sind und in einem Abstand (A) vom Traggerüst enden.

FIG. 2

EP 0 340 548 A1

## Bodenwalze

Die Erfindung betrifft eine Bodenwalze gemäß Oberbegriff des Anspruches 1.

Eine derartige Bodenwalze ist bereits durch die EP-A 02 45 648 bekanntgeworden und dient zum Andrücken des Bodens für die Saatbettbereitung. Die aus auf einem Traggerüst drehbar nebeneinander angeordneten Gummireifen mit im inneren der Gummireifen zwischen dem Traggerüst und der Lauffläche der Gummireifen angeordneten Stützkörpern, die zum Abstützen der Lauffläche dienen, bestehende Bodenwalze hat sich zur Saatbettrückverfestigung von Ackerflächen mit den unterschiedlichsten Bodenarten in hervorragender Weise bewährt. Diese Bodenwalze bietet die Vorteile einer relativ starren Walze mit gutem Walzeffekt und einer relativ weichen, eine gute Walkarbeit aufweisenden Walze, welches die Hauptkreterien einer Walze für die Saatbettbereitung darstellen. Die im Inneren der Gummireifen zwischen dem Traggerüst und der Lauffläche der Gummireifen zum Abstützen der Lauffläche dienenden Stützkörper sind als umlaufende Ringe unterschiedlichster Formgebung ausgebildet und weisen einen etwas kleineren Außendurchmesser als der innerste Außendurchmesser der Gummireifen auf. Beim Abrollen der Gummireifen auf dem Erdboden stützen sich die Gummireifen auf den jeweiligen Stützkörpern ab, wobei die als umlaufende Ringe ausgebildeten Stützkörper den wirksamen Walzendurchmesser bilden. Die Stützkörper begrenzen die Verformung des Gummireifens in der Aufstandsfläche des Reifens auf den Boden und durch die Rotation der Gummireifen kommt es zu einer ständigen Veränderung der momentanen Aufstandsfläche des Reifenumfanges, wobei die Verformung des Reifens im Bereich der Aufstandsfläche immer wieder aufgehoben wird, wodurch der Reifen eine Walkarbeit ausführt. Dieses ständige Walken des Gummireifens ruft einen Selbstreinigungseffekt der Reifen hervor, so daß im Bereich der Aufstandsfläche am Reifen anhaftende Erde bei Verlassen des Reifenumfanges aus dem Bereich der Aufstandsfläche sofort wieder vom Gummireifen abspringt.

Die im Inneren der Gummireifen zu montierenden Stützkörper bestehen aus mehreren Einzelteilen, die nach Einsatz in das jeweilige Innere der Gummireifen entweder miteinander verschraubt oder verschweißt werden müssen, was sehr zeitaufwendig ist, wodurch die Herstellkosten, bedingt durch den sehr hohen Lohnkostenanteil, hoch sind.

Der Erfindung liegt nun die Aufgabe zugrunde, die Anordnung von Stützkörpern innerhalb der Gummireifen bei der bekannten Bodenwalze wesentlich zu vereinfachen und zu verbessern und gleichzeitig entsprechende Reifen zu schaffen.

Diese Aufgabe wird in erfindungsgemäßer Weise dadurch gelöst, daß die Stützkörper auf/an der Innenseite der Lauffläche der Reifen angeordnet sind und in einem Abstand vom Traggerüst enden. Infolge dieser Maßnahme entfallen die als zusätzliche Bauteile herzustellenden und in das Reifeninnere zu montierenden Stützkörper, so daß der Fertigungsaufwand zum Herstellen einer Bodenwalze aus nebeneinander auf dem Traggerüst angeordneten Gummireifen erheblich reduziert wird, wodurch sich die Gummireifens in der Aufstandsfläche des Reifens auf den Boden und durch die Rotation der Gummireifen kommt es zu einer ständigen Veränderung der momentanen Aufstandsfläche des Reifenumfanges, wobei die Verformung des Reifens im Bereich der Aufstandsfläche immer wieder aufgehoben wird, wodurch der Reifen eine Walkarbeit ausführt. Dieses ständige Walken des Gummireifens ruft einen Selbstreinigungseffekt der Reifen hervor, so daß im Bereich der Aufstandsfläche am Reifen anhaftende Erde bei Verlassen des Reifenumfanges aus dem Bereich der Aufstandsfläche sofort wieder vom Gummireifen abspringt.

Die im Inneren der Gummireifen zu montierenden Stützkörper bestehen aus mehreren Einzelteilen, die nach Einsatz in das jeweilige Innere der Gummireifen entweder miteinander verschraubt oder verschweißt werden müssen, was sehr zeitaufwendig ist, wodurch die Herstellkosten, bedingt durch den sehr hohen Lohnkostenanteil, hoch sind.

Der Erfindung liegt nun die Aufgabe zugrunde, die Anordnung von Stützkörpern innerhalb der Gummireifen bei der bekannten Bodenwalze wesentlich zu vereinfachen und zu verbessern und gleichzeitig entsprechende Reifen zu schaffen.

Diese Aufgabe wird in erfindungsgemäßer Weise dadurch gelöst, daß die Stützkörper auf/an der Innenseite der Lauffläche der Reifen angeordnet sind und in einem Abstand vom Traggerüst enden. Infolge dieser Maßnahme entfallen die als zusätzliche Bauteile herzustellenden und in das Reifeninnere zu montierenden Stützkörper, so daß der Fertigungsaufwand zum Herstellen einer Bodenwalze aus nebeneinander auf dem Traggerüst angeordneten Gummireifen erheblich reduziert wird, wodurch sich die Herstellkosten ebenfalls verringern.

In der Ausführungsform der Bodenwalze ist erfindungsgemäß vorgesehen, daß die Stützkörper beim Abrollen der Gummireifen auf der Bodenoberfläche sich mit ihren dem Traggerüst zugeordneten Seiten auf den Traggerüst abstützen. Hierdurch stützt sich der Gummireifen im Bereich seiner Aufstandsfläche auf dem Boden über die an der Innenseite der Lauffläche der Reifen angeordneten Stützkörper am Traggerüst ab und bildet so den wirksamen Walzendurchmesser. Durch dieses Abstützen des Gummireifens mittels dieser Stützkörper am Traggerüst wird die Verformung des Gummireifens in der Aufstandsfläche des Reifens auf den Boden begrenzt, wie dieses auch bereits bei den durch den Stand der Technik bekannten Stützkörpern bekannt ist.

In einer besonders bevorzugten Ausführungsform ist in erfindungsgemäßer Weise vorgesehen, daß zwischen den einander benachbarten Gummireifen und im Inneren der Gummireifen Distanzringe abdichtend angeordnet sind und daß sich die inneren umlaufenden Enden der Stützkörper beim Abrollen des Reifens auf der Bodenoberfläche auf den im Inneren des Reifens auf dem Traggerüst angeordneten Distanzring abstützen.

Die Ausführungsform der Bodenwalze sieht erfindungsgemäß vor, daß die Stützkörper im Inneren gebrachter PKW-Reifen anvulkanisiert werden. Hierdurch müssen dann nur noch die jeweiligen Distanzringe beim Auffädeln der Reifen auf das Traggerüst montiert werden, was sehr einfach durchzuführen ist. Stützkörper und Reifen sind somit einstückig ausgebildet.

Des weiteren ist erfindungsgemäß vorgesehen, daß die Stützkörper aus elastischem Material, welches vorzugsweise zumindest in dem Abstützbereich verschleißfest ausgebildet ist, hergestellt sind. Infolge dieser Maßnahme ist es für die Stützräder auf einfachste Weise möglich, beim Auftreffen auf Steine auszuweichen, wobei die verschleißfeste Gestaltung des Abstützbereiches die Stützkörper in vorteilhafter Weise vor Verschleiß beim Zusammenwirken mit den aus Metall hergestellten Bauteilen, auf denen sich die Stützkörper abstützen, schützen.

Weiterhin sieht die Erfindung die Schaffung eines Reifens vor, bei dem vorgesehen ist, daß im Inneren der Gummireifen an dem inneren Bereich der Laufflächen an dem Gummireifen aus elastischem Material bestehende, als umlaufende Ringe ausgebildete Stützkörper angeordnet sind, welche einen größeren Durchmesser als der Durchmesser der Reifenwulste aufweisen. Hierdurch sind Reifen und Stützkörper einstückig ausgebildet, wobei sich die Gummireifen beim Abrollen derart auf dem Erdboden abstützen, daß die Stützkörper die Verformung des Gummireifens in der Aufstandsfläche des Reifens begrenzen, so daß die Verformung des Reifens im Bereich der Aufstandsfläche immer wieder aufgehoben wird und der Reifen so die gewünschte Walkarbeit ausführt. Sollen nun diese einzelnen Reifen nebeneinander zu einer Walze auf einem Traggerüst angeordnet werden, sind nur noch die einzelnen Distanzringe zu montieren, welches auf einfachste Art und Weise durchführbar ist.

Damit die Stützkörper nicht beim Abstützen auf dem Traggerüst verschleißen und ein Ausweichen der Stützkörper beim Auftreffen auf Steine sowie eine preiswerte Herstellung dieser Reifen möglich ist, ist erfindungsgemäß vorgesehen, daß die Stützkörper aus verschleißfestem Material hergestellt und elastisch ausgebildet sowie aus einem anderen Material als die Gummireifen hergestellt sind.

Zur Materialeinsparung bei gleichzeitiger dauerfester Verformbarkeit unter Berücksichtigung der Hauptkreterien zum Einsatz derartiger, zu einer Walze nebeneinander aufgefädelter Reifen kann erfindungsgemäß vorgesehen sein, daß innerhalb der Stützkörper Durchbrüche angeordnet sind.

Weitere Einzelheiten der Erfindung sind der Beispielsbeschreibung und den Zeichnungen zu entnehmen. Hierbei zeigt

Fig. 1 eine in erfindungsgemäßer Weise ausgebildete Nachlaufwalze, welche als Fahrwerk einer Drillmaschine dient und hinter einer Bodenwalze angeorddnet ist und

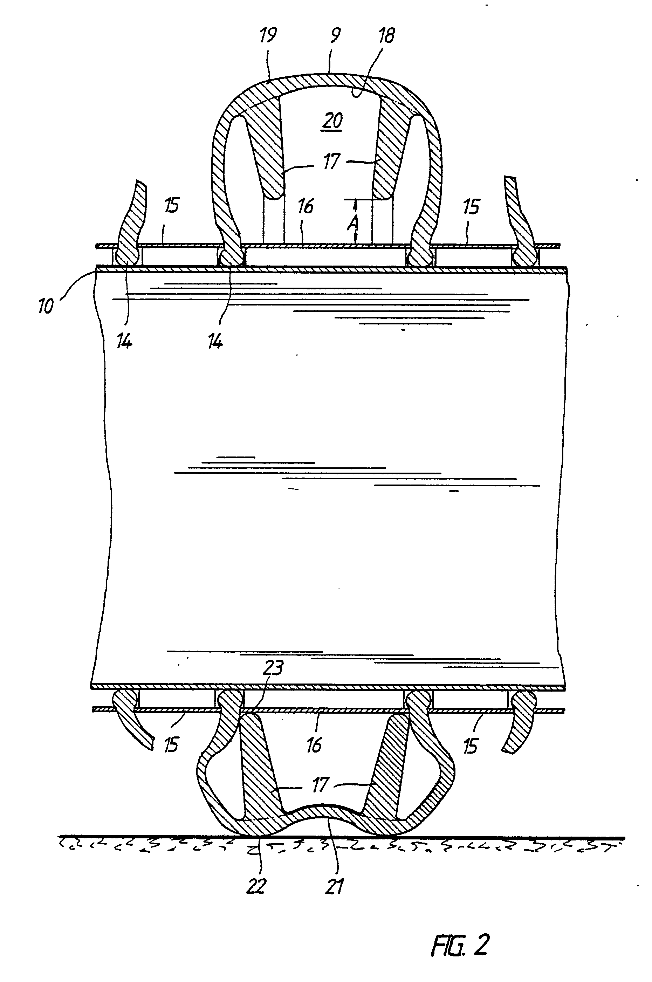

Fig. 2 die Anordnung der Gummireifen mit den an den Gummireifen angeordneten Stützkörpern einer erfindungsgemäßen Bodenwalze im Schnitt und in Teilansicht.

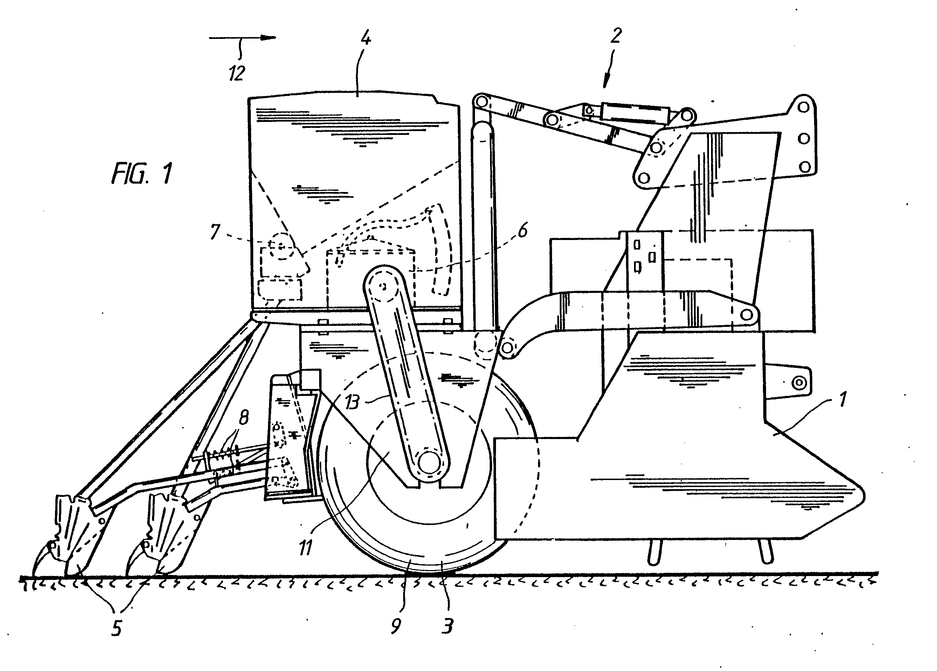

Die Fig. 1 zeigt eine landwirtschaftliche Gerätekombination, die aus der schleppergetriebenen Bodenbearbeitungsmaschine 1 und der hinter der Bodenbearbeitungsmaschine 1 über das Dreipunktgestänge 2 angeordneten Bodenwalze 3 mit der aufgesattelten Drillmaschine 4 besteht. Die Bodenwalze 3 ist somit als Nachlaufwalze hinter der Bodenbearbeitungsmaschine 1 und gleichzeitig als Fahrwerk für die Drillmaschine 4 ausgebildet. Die Bodenwalze 3 bestimmt die Eingriffstiefe der Bodenbearbeitungswerkzeuge der Bodenbearbeitungsmaschine 1. Die Drillmaschine 4 weist die Säschare 5 auf, die in zwei hintereinander liegenden Querreihen angeordnet sind. Von der Bodenwalze 3 aus werden über den regelbaren Antrieb 6 die Dosierorgane 7 der Drillmaschine 4 angetrieben. Die Säschare 5 werden durch die Schardruckfedern 8 gegen den Boden gedrückt.

Die Bodenwalze 3 besteht aus den nebeneinander angeordneten Gummireifen 9, die auf dem drehbar gelagerten Traggerüst 10 angeordnet sind. Das Traggerüst 10 ist als Tragrohr ausgebildet, welches über nicht näher dargestellte Lager an den seitlichen Tragarmen 11 drehbar angeordnet ist, wobei der in Fahrtrichtung 12 gesehene rechte Tragarm 11 als Lagergehäuse für den Antrieb 13 des Regelgetriebes 6 ausgebildet ist.

Auf dem durchgehenden Tragrohr 10 sind die Gummireifen 9 nebeneinander angeordnet. Das Tragrohr 10 weist einen Außendurchmesser auf, der in etwa dem Innendurchmesser der Gummireifen 9 entspricht. Somit sind also die Gummireifen 9 sehr einfach auf das Tragrohr 10 von der einen Seite her aufzuschieben. An der einen Seite des Tragrohres 10 ist ein nicht näher dargestellter Stirnring mittels als Spannvorrichtung ausgebildete Schrauben angeordnet. Auf der anderen Seite des Tragrohres 10 ist eine ebenfalls nicht näher dargestellte Stirnwand an der Stirnfläche des Tragrohres 10 angeschweißt. Der Außendurchmesser der Stirnwände ist größer als der Außendurchmesser des Tragrohres, so daß der überstehende Ring jeder Stirnwand als Anlagefläche für den Wulst 14 der Reifen 9 dient. Zwischen den einzelnen Gummireifen 9 sind jeweils die als Ringe ausgebildeten Distanzringe 15 angeordnet, die einen etwas größeren Innendurchmesser als das Tragrohr 10 aufweist. Damit die Reifen 9 beim Auffädeln richtig montiert und verdrehfest auf dem Tragrohr 10 befestigt werden, befindet sich in jedem Gummireifen 9 ein Abstandsring 16, die den gleichen Durchmesser wie die Distanzringe 15 aufweisen. Die jeweiligen Distanzringe 15 und die einzelnen Abstandsringe 16 wirken derart mit den Reifenwulsten 14 zusammen, so daß die Reifen ordnungsgemäß auf dem Tragrohr 10 befestigt sind und kein Erdreich in das Innere der Gummireifen 9 eindringen kann.

Im Inneren der Gummireifen 9 sind die Stützkörper 17 auf der Innenseite 18 der Lauffläche 19 der Gummireifen 9 derart angeordnet, daß sie einen Abstand A vom Tragrohr 10 aufweisen. Durch den sich zwischen den Stützkörpern 17 befindlichen umlaufenden Freiraum 20 kann sich die mittlere Lauffläche 21 des Reifens 9 in den Freiraum 20 zwischen den beiden Abstützkörpern 17 nach innen hineindrücken. Hierbei kommt es im Bereich der Aufstandsfläche 22 des Reifens 9 zu einer Verformung des Reifens, wobei diese Verformung durch Aufstützen der Abstützkörper 17 auf dem jeweiligen Distanzring 15 begrenzt wird. Die Stützkörper 17 können derart ausgebildet sein, daß sie ganz aus einem elastischen, verscheißfreiem Material hergestellt sind, oder aber sie sind nur im Abstützbereich 23 der Stützkörper 17 auf dem Abstandsring 16 verschleißfest ausgebildet.

**Ansprüche**

1. Bodenwalze, insbesondere Nachlaufwalze hinter einer Bodenbearbeitungsmaschine und/oder als Fahrwerk einer Drillmaschine, mit nebeneinander auf einem Traggerüst drehbar angeordneten Gummireifen, wobei im Inneren der Gummireifen zwischen dem Traggerüst und der Lauffläche der Gummireifen ein oder mehrere Stützkörper zum Abstützen der Lauffläche angeordnet sind, dadurch gekennzeichnet, daß die Stützkörper (17) auf der Innenseite (18) der Lauffläche (19,21) der Reifen (9) angeordnet sind und in einem Abstand (A) vom Traggerüst (10) enden.

2. Bodenwalze nach Anspruch 1, dadurch gekennzeichnet, daß die Stützkörper (17) beim Abrollen der Gummireifen (9) auf der Bodenoberfläche sich mit ihrem dem Traggerüst (10) zugeordneten Seiten (23) auf dem Traggerüst (10) abstützen.

3. Bodenwalze nach einem oder mehrerer vorhergehender Ansprüche, dadurch gekennzeichnet, daß zwischen den einander benachbarten Gummireifen (9) und im Inneren der Gummireifen (9) Distanzringe (15,16) abdichtend angeordnet sind und daß sich die inneren umlaufenden Enden der Stützkörper (17) sich beim Abrollen des Reifens (9) auf der Bodenoberfläche auf den im Inneren des Reifens (9) auf dem Traggerüst (10) angeordneten Distanzring (16) abstützen.

4. Bodenwalze nach einem oder mehrerer vorhergehender Ansprüche, dadurch gekennzeichnet, daß die Stützkörper (17) im Inneren gebrauchter PKW-Reifen (9) anvuklanisiert werden.

5. Bodenwalze nach einem oder mehrerer vorhergehender Ansprüche, dadurch gekennzeichnet, daß die Stützkörper (17) aus elastischem Material, welches vorzugsweise zumindest in dem Abstützbereich (23) verschleißfest ausgebildet ist, hergestellt sind.

6. Reifen, insbesondere für eine Nachlaufwalze hinter einer Bodenbearbeitungsmaschine und/oder als Fahrwerk einer Drillmaschine, dadurch gekennzeichnet, daß im Inneren der Gummireifen (9) an dem inneren Bereich (18) der Lauffläche (19) an dem Gummireifen (9) aus elastischem Material bestehende, als umlaufende Ringe ausgebildete Stützkörper (17) angeordnet sind, welche einen größeren Durchmesser als der Durchmesser der Reifenwulste (14) aufweisen.

7. Reifen nach Anspruch 6, dadurch gekennzeichnet, daß die Stützkörper (17) aus verschleißfestem Material hergestellt und elastisch ausgebildet sowie aus einem anderen Material als die Gummireifen (9) hergestellt sind.

8. Reifen nach Anspruch 7, dadurch gekennzeichnet, daß innerhalb der Stützkörper (17) Durchbrüche angeordnet sind.

FIG. 1

AMAZONEN-WERKE H.DREYER GmbH & Co.KG

EP 0 340 548 A1

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| P,Y | EP-A-299190 (AMAZONEN-WERKE) <br> * Spalte 6, Zeile 22 - Spalte 7, Zeile 21; Figuren 3, 7 * <br> --- | 1-8 | A01B29/04 <br> B60C17/04 |
| Y | US-A-3367381 (AGHNIDES,E.P.) <br> * Spalte 2, Zeile 21 - Spalte 3, Zeile 46; Figuren 1-4 * <br> --- | 1-8 | |
| D,A | EP-A-245648 (AMAZONEN-WERKE) <br> * Spalte 15, Zeile 43 - Spalte 16, Zeile 24; Figur 13 * <br> ----- | 1-8 | |

| | | | RECHERCHIERTE SACHGEBIETE (Int. Cl.4) |
|---|---|---|---|
| | | | A01B <br> B60C |

**Der vorliegende Recherchenbericht wurde für alle Patentansprüche erstellt**

| Recherchenort | Abschlußdatum der Recherche | Prüfer |
|---|---|---|
| DEN HAAG | 17 AUGUST 1989 | WOHLRAPP R.G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

....................................................
& : Mitglied der gleichen Patentfamilie, übereinstimmendes Dokument